Europäisches Patentamt

European Patent Office

Office européen des brevets

(11) Veröffentlichungsnummer : **0 084 620**
**B1**

(12) **EUROPÄISCHE PATENTSCHRIFT**

(45) Veröffentlichungstag der Patentschrift :
25.03.87

(51) Int. Cl.⁴ : **B 65 B 27/12, A 01 F 15/14**

(21) Anmeldenummer : **82110703.4**

(22) Anmeldetag : **19.11.82**

(54) **Vorrichtung zum Umschnüren von Ballen.**

(30) Priorität : **25.01.82 DE 3202233**

(43) Veröffentlichungstag der Anmeldung :
**03.08.83 Patentblatt 83/31**

(45) Bekanntmachung des Hinweises auf die Patenterteilung : **25.03.87 Patentblatt 87/13**

(84) Benannte Vertragsstaaten :
**DE FR GB NL SE**

(56) Entgegenhaltungen :
**FR-A- 2 267 938**
**FR-A- 2 441 485**

(73) Patentinhaber : **Lindemann Maschinenfabrik GmbH**
**Erkrather Strasse 401**
**D-4000 Düsseldorf 1 (DE)**

(72) Erfinder : **Kaldenbach, Erwin**
**Berliner Strasse 58**
**D-4030 Ratingen (DE)**

(74) Vertreter : **Bergen, Klaus, Dipl.-Ing. et al**
**Patentanwälte Dr.-Ing. Reimar König Dipl.-Ing. Klaus**
**Bergen Wilhelm-Tell-Strasse 14 Postfach 260162**
**D-4000 Düsseldorf 1 (DE)**

## Beschreibung

Die Erfindung betrifft eine Eindrahtverschnürungsmaschine zum Pressen und Verschnüren von Ballen aus Altmaterial, insbesondere Altpapier, mit einem Preßkasten, einem darin beweg-lichen Preßstempel, einer Verschnürungseinrich-tung mit einer Schneid- und Drilleinrichtung sowie mit einer entlang einer Ballenrückseite beweglichen Schnürnadel zum Bilden einer Drahtschleife über die Ballenfläche, auf der die Verdrillung erfolgen soll, hinaus, aus dem von einer rückwärts gelegenen Vorratsrolle kommenden, an der gegenüberliegenden Ballenlängsseite und der Stirnseite vorbeiführenden Draht und mit einer Vorrichtung zum Längstransport des Drahtes in Preßrichtung in die Verdrillposition.

Eine aus der DE-PS 2 105 163 bekannte Maschi-ne der obigen Gattung weist eine sogenannte Eindrahtverschnürung auf, bei der zunächst der mit seinem freien Ende vor dem Ballen hochstehende und unter dem Ballen rückwärts zur Vorratsrolle verlaufende Draht durch eine längs einer Ballenrückseite bewegliche Schnürnadel bis über die Ballenoberkante hochgeführt wird. Durch eine Vorwählbarkeit der Länge des Hubweges der Schnürnadel ist die Länge der damit zu erzeugenden Drahtschleife einstellbar. Die so gebildete Drahtschleife kann in dem über die Ballenoberseite überstehenden Bereich eine Drahtlänge haben, die etwa dem Zweifachen der Ballenlänge entspricht. Diese Maßnahme ist hierbei erforderlich, um auch überlange Ballen noch mit Draht umschnüren zu können. Mit Hilfe einer schwenkbaren und in Achsrichtung beweglichen Klemm- und Schneideinrichtung wird das der Ballenrückseite zugeordnete Drahtende der hochgezogenen Drahtschleife festgeklemmt und abgetrennt. Die Klemm- und Schneideinrichtung verschwenkt sodann das festgeklemmte Drahtende unter Bildung einer Kreuzungsstelle neben das von einer Magnethalterung gehaltene freie Drahtende. An dieser Stelle findet nachfolgend unter Einsatz einer von oben eingreifenden, axial auf- und ab beweglichen Drilleinrichtung eine Verdrillung der beiden Drahtenden miteinander statt.

Die Anwendung dieser bekannten Technik ist mit einigen Nachteilen in bezug auf die Verschnürung überlanger Ballen behaftet, wie sie z. B. bei der Pressung inhomogener, in seiner Dichte und Zusammendrückbarkeit in starkem Maße wechselndem Material entstehen könnte. Durch die verschiedenartigen, nachfolgend geschilderten Schwierigkeiten und erforderlichen Manipulationen bei dem bekannten Verschnürsystem ist eine einwandfreie Verschnürung der Ballen nicht immer gewährleistet. Ein Nachteil ergibt sich bspw. aus dem Umstand, daß das der Rückseite des fertig gepreßten Ballens zugeordnete Drahtende der Drahtschleife mittels einer Schneideinrichtung abgetrennt und von der Schnürnadel weg mittels einer Klemmvorrichtung in Verdrillposition transportiert werden muß. Diese Klemm- bzw. Übernahmevorrichtung stellt einen zusätzlichen Unsicherheitsfaktor in dem bekannten Verschnürsystem dar, weil das zu übernehmende Drahtende infolge von Drahtverwerfungen nicht immer lagegenau in der Verschnürebene ausgerichtet und gespannt gehalten ist, so daß diesbezüglich bei der Übernahme Schwierigkeiten auftreten können. Um dieses Problem der — überlangen Ballen — mit der bekannten Verschnürung bewältigen zu können, muß das an der Ballenstirnseite vorbeiführende Drahtende schon vor jedem Verschnürvorgang so lang ausgelegt sein, daß auch der größte etwaig produzierte Ballen noch mit Draht umwickelt werden kann. Diese Maßnahme ist erforderlich, damit das freie Drahtende, unabhängig von der Länge des produzierten Ballens ausreichend lang ist, um mit dem an der Ballenrückseite mittels der Schnürnadel hochgezogenen und durch die Schneidvorrichtung abgetrennten Drahtende immer an der gleichen Stelle, nämlich in der Verdrillebene, gekreuzt werden kann. Andernfalls wäre eine Verschnürung nicht möglich, weil die Drilleinrichtung, die zwar axial auf und ab bewegt werden kann, auf die Verdrillebene bezogen fest fixiert ist und immer an der gleichen Stelle zum Eingriff kommt. Bei einem in seinen Abmessungen normal lang evtl. auch kurz ausgefallenen Ballen, wie er während eines Arbeitsablaufes am häufigsten produziert wird, wird das auf die Maximalballenlänge ausgelegte Drahtende für die Verschnürung des Ballens nur zu einem gewissen Teil benötigt, so daß es bei der Verschnürung dieser Art von Ballen zu einem erheblichen Drahtabfall kommt.

Hinzu kommt außerdem, daß die Schnürnadel bei einem überlang produzierten Ballen so hoch gefahren werden muß, daß die gebildete Drahtschleife eine Länge aufweist, die dem zweifachen der Ballenlänge entspricht, dazu wird die Schnürnadel einen dementsprechend großen Hub erfordern. Resultierend aus dem großen Hub ist in technischer Hinsicht eine relativ hohe Zeitdauer für ein Arbeitsspiel und eine dement-sprechende Pressen- und Hallenbauhöhe ver-bunden, was in wirtschaftlicher Hinsicht zu einem kostenmäßig hohen Bauaufwand führt. Da die Länge des von der Ballenstirnseite aus herangeführten Drahtendes im übrigen immer ein « Rest-produkt » des vorhergehenden Ver-schnürvorganges, d. h. des auf die Länge des vorhergehenden Ballens abgestimmten Hubweges der Schnürnadel ist, ist mit der bekannten Vorrichtung eine genau auf die jeweils zu um-schnürende Ballenlänge abgestimmte Drahtdo-sierung ohnehin nicht möglich.

Der Erfindung liegt daher die Aufgabe zugrunde, die eingangs genannte Vorrichtung dahingehend zu verbessern, daß der bei der Verschnürung von überlang produzierten Ballen anfallende Drahtabfall auf alle Fälle vermieden wird und eine funktionssichere sowie störungsfreie Verschnürung der Ballen gewährleistet ist. Erfindungsgemäß wird diese Aufgabe dadurch gelöst, daß die Schnürnadel mit der Drahtschleife parallel zur Preßrichtung bis gegen die eingenommene Position der Drilleinrichtung verfahrbar ist. Mit einer so gestalteten Verschnüreinrichtung können auch überlange Ballen problemlos automatisch, ohne Drahtabfall verschnürt werden. Aufgabe der in Preßrichtung verfahrbaren Schnürnadel ist es dabei, die an der Ballenunterseite vorbeiführende, zu einer Drahtschleife hochgezogene Drahtstrecke, über die Ballenoberseite zu transportieren und an die eingenommene Position des an der Drilleinrichtung gehaltenen freien Drahtendes heranzuführen, wo dann eine Verdrillung der beiden Drahtenden miteinander stattfindet.

Aus FR-A-2 441 485 ist eine Vorrichtung mit sogenannter « Zweidrahtverschnürung » bekannt, bei der der zur Verschnürung erforderliche Draht von zwei Drahtrollen abgezogen wird. Bei der erfindungsgemäßen Verschnürungsart handelt es sich demgegenüber um eine « Eindrahtverschnürung », bei der der benötigte Draht lediglich von der Drahtrolle 7 abgezogen wird ; das freie Drahtende liegt auf dem Ballen an diesem an. Mit diesem Unterschied sind für die Zweidrahtverschnürung verschiedene Nachteile verbunden, wobei, abgesehen von dem zusätzlichen Bauaufwand, ein wesentlicher Nachteil darin besteht, daß zwei Drillstellen für jede einen Ballen umschließende Schlaufe hergestellt werden müssen. Diese beiden Drillstellen bedeuten einen Unsicherheitsfaktor bzw. eine Schwächung im Hinblick auf eventuell auftretende Bruchstellen. Bei der Eindrahtverschnürung, wie sie mit der Erfindung erreicht wird, entsteht nur eine Drillstelle.

Gemäß einer Weiterbildung der Erfindung wird ein noch flexibleres Eingehen auf unterschiedliche Ballenlängen dadurch ermöglicht, daß die Drilleinrichtung verfahrbar ist. Letztere nimmt bei einem normal lang produzierten Ballen eine fixierte Grundstellung etwa in der Mitte des Ballens ein. Sie verläßt hingegen bei der Produktion eines überlangen Ballens ihren Standort und bewegt sich in Preßrichtung mit der von der Ballenstirnseite kommenden Drahtstrecke um die Wegstrecke fort, die durch das über eine Normalballenlänge hinaus verpreßte Material vorgegeben ist. Durch diese Beweglichkeit der Drilleinrichtung werden im angesprochenen Betriebsfall Relativbewegungen zwischen der an der Unterseite und vorderen Stirnseite des Ballens anliegenden Drahtstrecke und dem Ballen sowie Überbeanspruchungen der Drilleinrichtung durch von Draht übertragene Zugkräfte vermieden.

Eine unterstützende Maßnahme zur Ausrichtung der am Verdrillvorgang beteiligten Drahtstrecke besteht in weiterer Ausgestaltung der Erfindung darin, daß an der Schnürnadel unterhalb des Fanghakens im Abstand senkrecht fluchtend mit dem Fanghaken eine Führung angeordnet ist.

Dadurch ergibt sich eine besonders funktionssichere Bauweise bzw. Führung, bei der der Draht unter Zwangsführung über die Ballenoberseite in die Verdrillposition transportiert werden kann.

Der Transport der Drahtstrecke in die Verdrillposition wird in vorteilhafter Weise noch durch eine in die Spitze der Schnürnadel eingearbeitete Führungsnut unterstützt bzw. erleichtert, die eine zusätzliche Zentrierung der Drahtstrecke während des Transportes über die Ballenoberseite erlaubt bzw. übernimmt.

Für einen optimalen Ablauf des Drillvorganges ist es von Bedeutung, daß die an der Verdrillung beteiligten Drähte möglichst senkrecht ausgerichtet in der Verschnürebene gehalten werden, damit sie von der Drilleinrichtung erfaßt werden können. Gemäß einer vorteilhaften Weiterbildung der Erfindung ist deshalb der der Drilleinrichtung zugewandte Schnürdraht zumindest in Verdrillposition zwischen Fanghaken, Führung und Spitze achsparallel zu der anderen damit zu vereinigenden Drahtstrecke geführt, so daß die Drilleinrichtung den Draht einwandfrei aufnehmen kann und keine zeitliche Verzögerung oder mechanische Behinderung im Arbeitsablauf des Drillvorganges auftritt.

Nach Vollendung eines Arbeitszyklus und Durchtrennung der miteinander verdrillten Drahtstrecken durch die Schneideinrichtung, verharrt die an die eingenommene Position der Drilleinrichtung herangefahrene Schnürnadel noch so lange an dieser Stelle, bis die um den Fanghaken geschlungene abgetrennte Drahtstrecke durch eine zwischenzeitlich neu erzeugte Ballenscheibe von dem Fanghaken abgezogen worden ist und sich in Preßrichtung durch weiter erzeugte Ballenscheiben mit diesem fortbewegt. Um eine bessere Führung dieser von der Ballenstirnseite kommenden Drahtstrecke in die erneut einzunehmende Drillposition zu gewährleisten und den Längstransport über die Ballenoberseite zu erleichtern, ist es vorteilhaft, daß die von der Ballenstirnseite kommende Drahtstrecke durch zumindest ein Klemmstück gehalten ist, wodurch auch gleichzeitig eine senkrechte Ausrichtung der Drahtstrecke in der Verschnürebene bzw. in der Verdrillposition bewirkt werden kann, die das Einführen der Drahtstrecke in die Drilleinrichtung begünstigt.

Weitere Einzelheiten der Erfindung werden nachfolgend anhand eines schematisch dargestellten Ausführungsbeispieles beschrieben.

Es zeigen :

Figur 1 eine Kanalballenpresse mit einer Eindrahtverschnürvorrichtung zum Umschnüren von Ballen, in der Seitenansicht

Figur 2 einen Schnitt entlang der Linie II-II durch die Vorrichtung gemäß Fig. 1 in vergrößerter Darstellung mit der zum Verdrillen dienenden Scheibe, während des Drillvorganges, in der Draufsicht und deren Zuordnung zur Schnürnadel

Figuren 3 bis 8 verschiedene Arbeitsphasen der Vorrichtung zum Verschnüren der Ballen

Figur 9 Ansicht in Pfeilrichtung IX in Fig. 3.

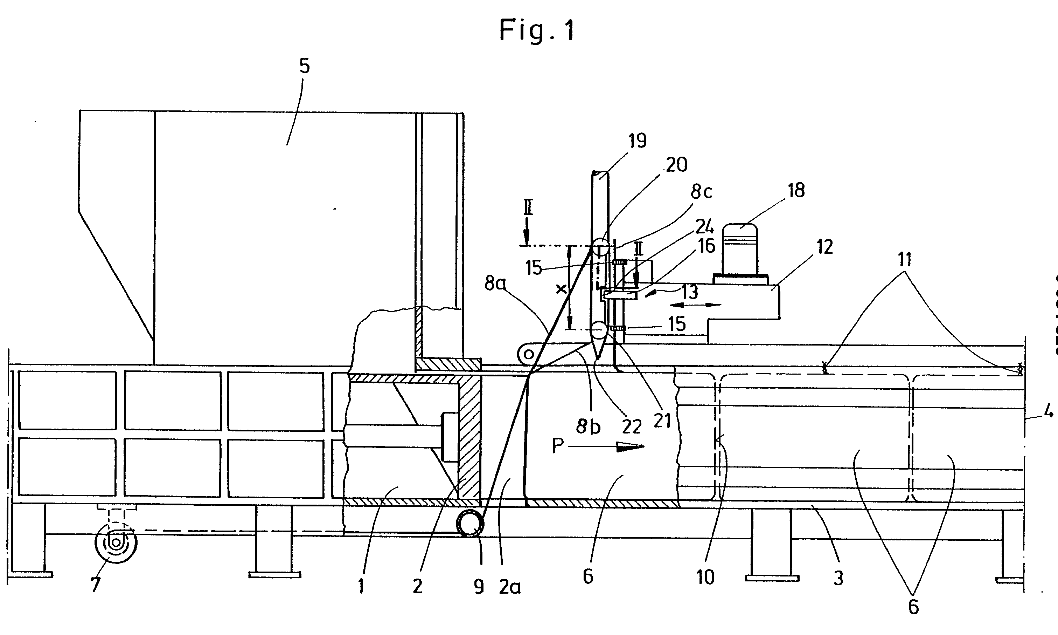

Die Ballenpresse gemäß Fig. 1 besteht im wesentlichen aus einem rechteckigen Preßkasten 1, mit Preßstempel 2, nebst einem nicht dargestellten Stempelantrieb. An den Preßkasten 1 schließt sich ein Preßkanal 3 an, dessen Querschnitt sich, gerechnet vom Preßkasten 1 bis zur Austrittsöffnung 4, zum Erzeugen der gewünschten Gegenkraft in geringem Maße verengt. Zu diesem Zweck ist mindestens eine Wand des Preßkanals 3 in der Neigung verstellbar. In den Prezßkasten 1 mündet von oben ein Füllschacht 5, durch den das zu verpressende Material aufgegeben wird. Zur Herstellung jedes Ballens sind mehrere Arbeitshübe des Preßstempels 2 in der durch den Pfeil gekennzeichneten Preßrichtung P erforderlich. Bei der Darstellung nach Fig. 1 befinden sich im Preßkanal 3 bereits drei gepreßte Ballen 6, von denen der mittlere und der rechte schon mit Draht verschnürt sind, während der linke zum Verschnüren bereitsteht. Von der unteren Vorratsrolle 7 läuft das zunächst freie Ende 8c des Drahtes 8 unterhalb des Preßkastens 1 über eine Umlenkrolle 9 um die vordere Stirnseite 10 des gerade zu verschnürenden Ballens herum und ist an der Oberseite dieses Ballens an einer Verdrillung 11, deren Herstellung weiter unten beschrieben wird, mit dem anderen Ende 8b des Drahtes, das aus der hochgezogenen Drahtschleife 8a, 8b resultiert, verbunden.

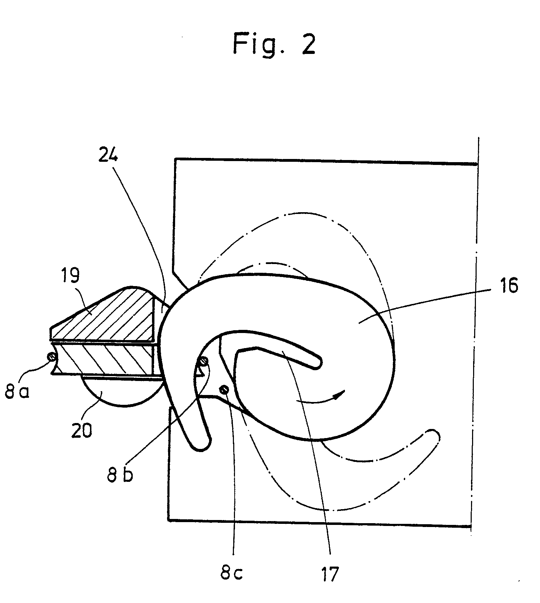

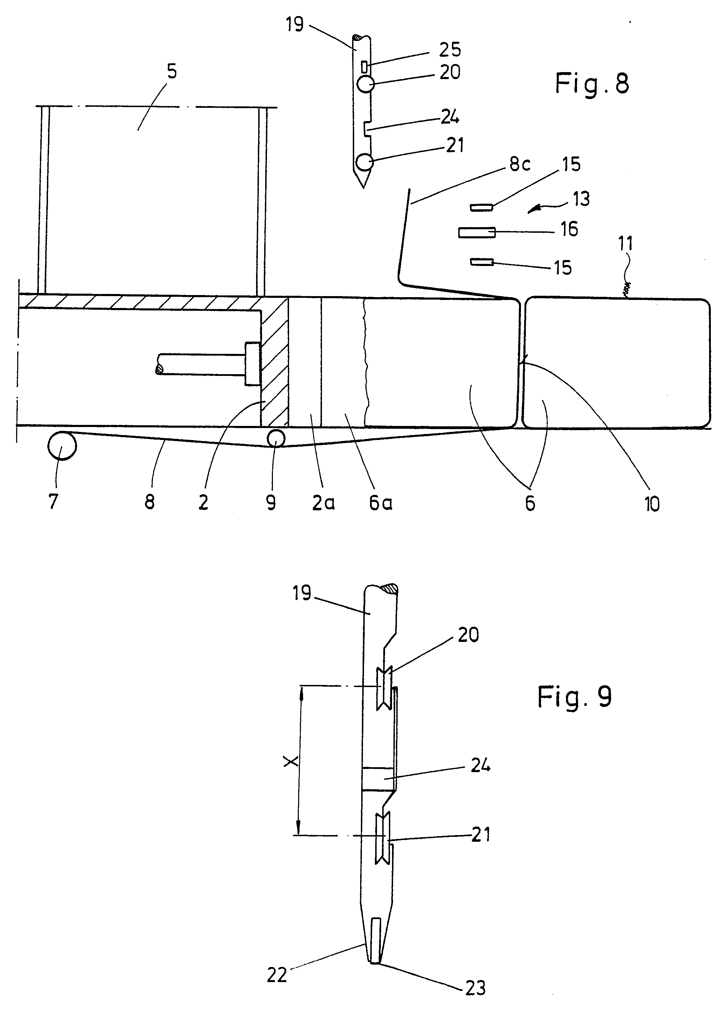

Auf dem Preßkanal 3 ist ein Gehäuse 12, auf nicht dargestellten Schienen, in Fig. 1 durch einen Pfeil gekennzeichnet, hin- und herfahrbar angeordnet. Das Gehäuse 12 ist Träger einer Drilleinrichtung 13 und einer Schneideinrichtung 14 sowie im dargestellten Ausführungsbeispiel zweier Klemmstücke 15, die ober- und unterhalb der Drilleinrichtung 13 angeordnet sind und mittels denen das freie, von der Ballenstirnseite 10 kommende Drahtende 8c festgeklemmt und senkrecht ausgespannt in der Verschnürebene gehalten wird. Die Drilleinrichtung 13 ist in Fig. 1 im bereits eingefahrenen Zustand gezeichnet. Sie enthält gemäß Fig. 2 u. a. ein Drillrad 16 mit einem Schlitz 17, welches von einem Motor 18 über ein Zwischengetriebe zu gewissen Zeiten angetrieben wird. Nach Beendigung des Drillvorganges tritt die in die Verschnürebene einschwenkbare, oberhalb der Drilleinrichtung 13 angeordnete Schneideinrichtung in Aktion, die die Verdrillung 11 bzw. die miteinander verdrillten Drähte 8b und 8c oberhalb der Drillstelle 11 durchtrennt. Eine in Richtung ihrer Längsachse auf und ab bewegliche Schnürnadel 19 ist mit einem Fanghaken 20 versehen, der im Abstand x zu einer unterhalb in Flucht mit dem Fankhaken ausgerichteten Führung 21 im dargestellten Beispiel als Führungsrolle angeordnet ist (s. a. Fig. 9). Durch diese Anordnung wird, wie nachfolgend noch detailliert erläutert, der Transport der Drahtschleife 8a, b mit der Schnürnadel 19 über die Ballenoberseite wesentlich erleichtert. Zusätzlich wird durch die achsparallele Führung der Drahtstrecke 8b zwischen Fanghaken 20 und Führungsrolle eine senkrechte Ausrichtung der Drahtstrecke 8b in der Verschnürebene gewährleistet, die nachfolgend eine Verdrillung der Drahtstrecke 8b mit dem freien Drahtende 8c ermöglicht. Die Schnürnadelspitze 22 ist außerdem um die Führung bzw. den Transport der Drahtstrecke 8b über die Ballenoberseite in die Verdrillposition zu erleichtern, mit einem Führungsschlitz 23 versehen. Damit die Drilleinrichtung 13 die zu verdrillende Drahtstrecke 8b einwandfrei erfassen kann, ohne mit dem Schnürnadelschaft zu kollidieren, ist in dem Schnürnadelschaft, wie man den Fig. 1 bis 8 und der Fig. 9 entnehmen kann, eine Nut eingearbeitet bzw. vorgesehen, so daß das Drillrad 16 während des Drillvorganges durch die Nut 24 fahren und die mit der Drahtstrecke 8c zu verdrillende Drahtstrecke 8b hintergreifen kann (Fig. 2).

Es sei an dieser Stelle erwähnt, daß für jeden Ballen normalerweise mehrere parallel zueinander angeordnete Schleifen vorgesehen sind, deren Anzahl sich nach den Ballenabmessungen richtet. Der Einfachheit halber wird die Erfindung hier jedoch nur an einer einzelnen Schnürebene erläutert, von denen in praktischer Ausführung mehrere fluchtend senkrecht zur Zeichenebene der Fig. 1 angeordnet sind.

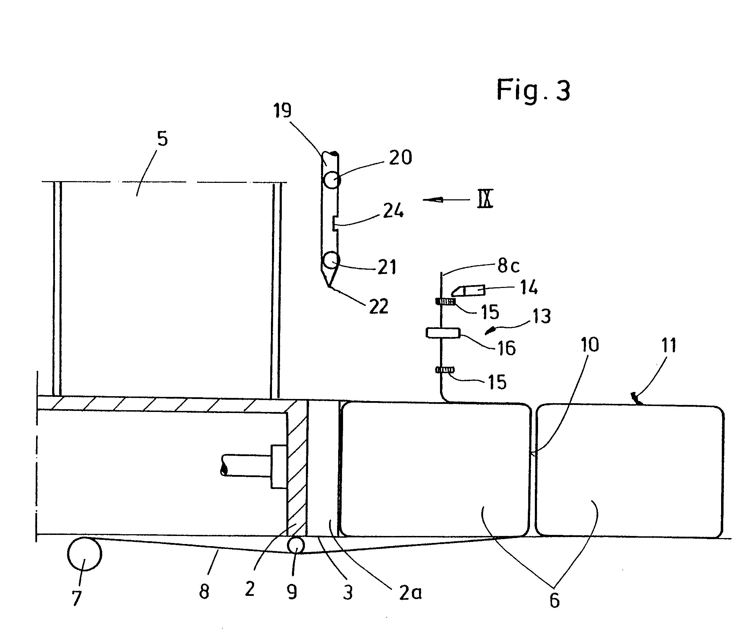

In Fig. 3 bis 8 ist im Interesse einer deutlichen Darstellung der erfindungsgemäß ausgebildeten Maschine auf eine erneute Darstellung der bereits im Zusammenhang mit Fig. 1 erläuterten Ballenpresse verzichtet worden. Die vorbeschriebene Vorrichtung arbeitet folgendermaßen:

Wenn gemäß Fig. 3 der linke Altpapierballen 6 gerade fertiggepreßt ist, befindet sich der Preßstempel 2 in der rechten Endstellung, so daß die im Kopf des Preßstempels ausgebildete Nut 2a mit der Schnürnadel fluchtet. Der von der Draht-Vorratsrolle 7 abgezogene Draht 8 führt an der Unterseite, an der Stirnseite 10 und an der Oberseite des Ballens 6 vorbei, bevor er ungefähr in der Mitte des Ballens um 90° zur Ballenachse umgelenkt wird. Diese um 90° umgelenkte später an der Verdrillung beteiligte Drahtstrecke wird nachfolgend mit Drahtstrecke 8c bezeichnet. Die Drahtstrecke 8c wird durch die an dem verfahrbaren Gehäuse 12 befestigten Klemmstücke 15 senkrecht ausgerichtet in der Verschnürebene gehalten. Die ebenfalls an dem Gehäuse 12 befestigte und damit verfahrbare Drilleinrichtung 13 und Schneideinrichtung 14 befinden sich bei einem normal lang ausgefallenen bzw. produzierten Ballen in einer fixierten Grundstellung, wie es u. a. in Fig. 1 bis 6 dargestellt ist. Der bei der Herstellung des Ballens 6 bzw. der bei einer neu erzeugten Materialscheibe 6a benötigte zusätzliche Draht 8 wird mit jedem ausgeführten Preßhub von der Draht-Vorratsrolle 7 abgezogen, während die Drilleinrichtung 13 in ihrer eingenommenen Position verharrt. Bei der Produktion eines überlangen Ballens hingegen verläßt die Drilleinrichtung 13 bzw. das verfahrbare Gehäuse 12 seinen Standort und bewegt sich mit der festgeklemmten Drahtstrecke 8c um die Wegstrecke — die durch das zuviel verpreßte Material vorgegeben ist — in Preßrichtung P fort, um den Unterschied in den verschiedenen Ballenlängen auszugleichen.

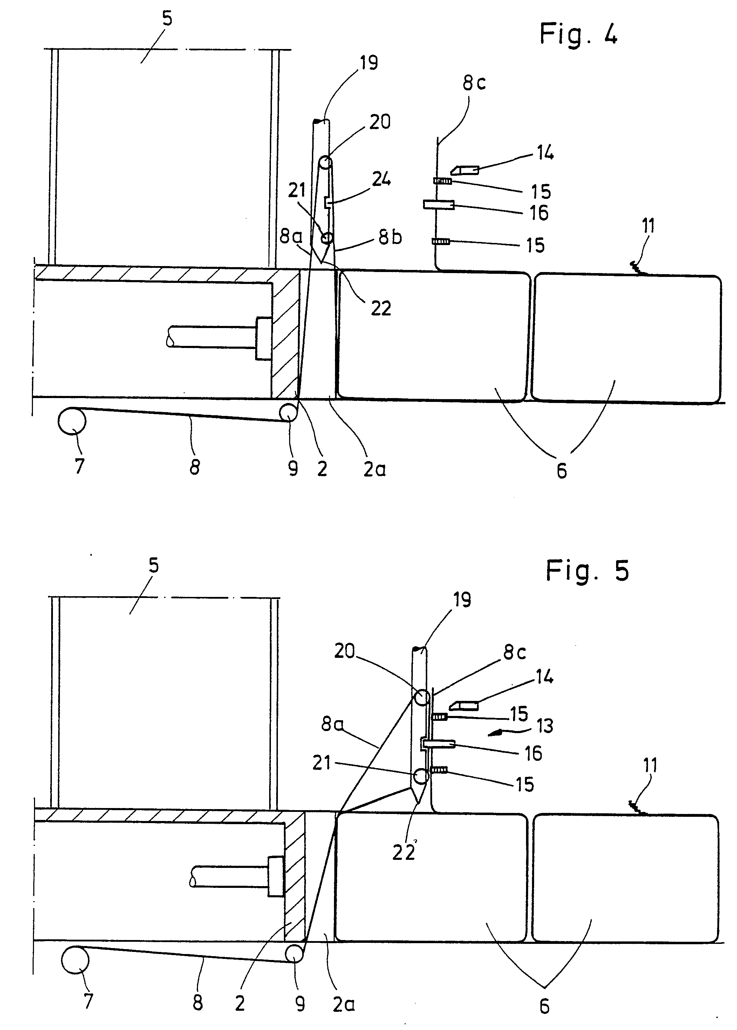

In der Position gemäß Fig. 4 hat die Schnürnadel 19 eine Ab- und Aufbewegung durchgeführt und der Fanghaken 20 dabei den Draht 8 erfaßt und eine aus den Drahtstrecken 8a, 8b bestehende Drahtschleife gebildet.

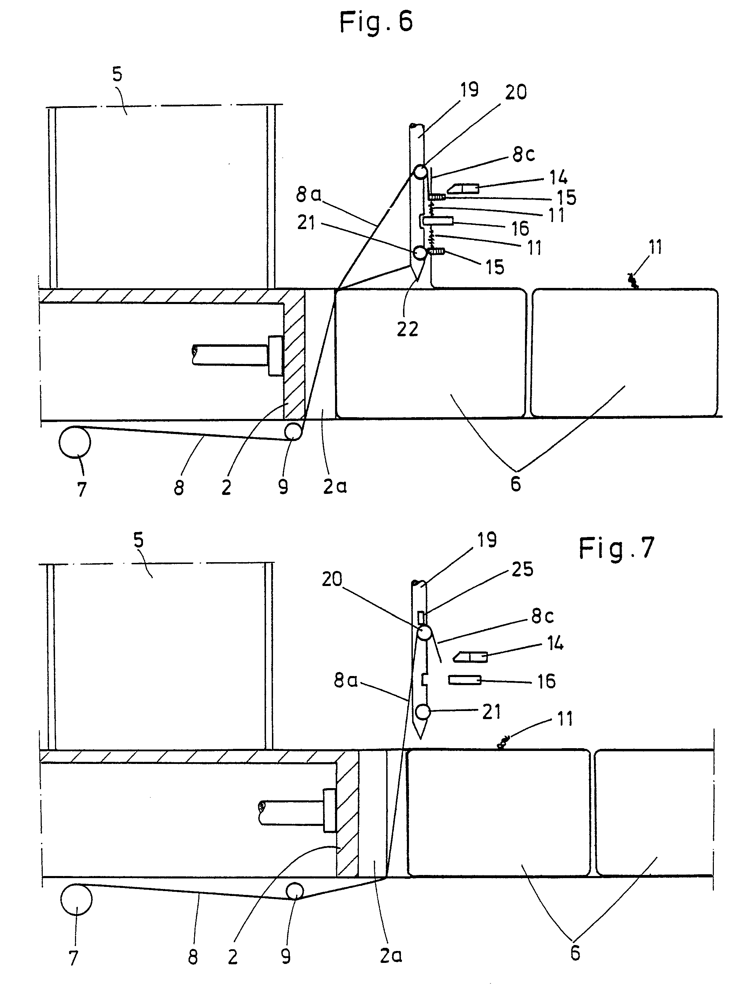

In Fig. 5 hat die Schnürnadel 19 die Drahtschleife 8a, b in Preßrichtung P bis an die eingenommene Position der Drilleinrichtung 13 herangeführt. Vor dem Transport des Drahtes über die Ballenoberseite hat sich die Drahtstrecke 8b zwischen Fanghaken 20, unterer Führungsrolle 21a und dem in der Spitze der Schnürnadel 22 eingearbeiteten Führungsschlitz 23 zentriert, so daß die Drahtstrecke 8b unter Zwangsführung bis in die Verdrillposition transportiert werden konnte. Außerdem ist durch die Führung der Drahtstrecke auf diese Art und Weise der der Drilleinrichtung 13 zugewandte Schnürdraht 8b zumindest in Verdrillposition zwischen Fanghaken 20 und Führungsrolle 21a achsparallel zu der anderen damit zu vereinigenden Drahtstrecke 8c — die durch die Klemmstücke 15 senkrecht ausgerichtet gehalten wird — geführt, so daß die Drilleinrichtung 13 die Drähte 8b und 8c einwandfrei erfassen kann. Dabei fährt das Drillrad 16 durch die in Höhe des Drillrades 16 im Schnürnadelschaft 19 eingearbeitete Nut 24, wodurch eine Kollision des Drillrades 16 mit der Schnürnadel 19 vermieden wird. Die Drahtstrecke 8b und 8c werden sodann miteinander verdrillt (s. Fig. 6). In Fig. 7 hat nach beendetem Verdrillvorgang die oberhalb des Drillrades 16 angeordnete Schneideinrichtung 14 die Verdrillung 11 abgetrennt. In dem Fanghaken 20 der Schnürnadel ist noch der obere abgetrennte Teil der Drahtstrecke 8c festgehakt. Nach Abtrennung der Drahtstrecke 8c von der Verdrillung 11 muß die Schnürnadel natürlich in die in Fig. 3 dargestellte Ausgangsposition zurückfahren und die Drahtstrecke 8a zwischen Fanghaken 20 und Umlenkrolle 9 bspw. durch ein nicht dargestelltes, hinter der Umlenkrolle 9 angeordnetes, handelsübliches Drahtmagazin gestrafft werden bzw. die eventuell auftretende Drahtlose beseitigt werden, damit für den folgenden Arbeitszyklus gleiche Voraussetzungen existieren, die wiederum einen funktionssicheren Ablauf gewährleisten. Damit während der Rückfahrbewegung der Schnürnadel 19 in die Ausgangsposition vermieden wird, daß sich die lose in dem Fanghaken 20 liegende, umgebogene Drahtstrecke aus dem Fanghaken 20 herauszieht, wird diese mit einem oberhalb des Fanghakens 20 angebrachten, hydraulisch betätigbaren Feststellelement 25 (s. Fig. 7) gesichert.

Gemäß Fig. 8 hat der Preßstempel 2 bereits neue Arbeitshübe ausgeführt und Materialscheiben 6a gegen den zwischen Ballenstirnseite 10 des neuen Ballens und Rückseite des fertiggepreßten Ballens 6 verlaufenden Draht 8 zur Bildung eines neuen Ballens gepreßt.

Das Feststellelement 25 wird gelöst und somit die um den Fanghaken 20 der Schnürnadel 19 liegende Drahtstrecke freigegeben. Die Schnürnadel 19 wird um eine gewisse Wegstrecke hochgefahren (s. Fig. 8), so daß bedingt durch das Hochfahren der Schnürnadel 19 und durch die fortschreitende Bildung eines neuen Ballens 6 das freie Drahtende 8c vom Fanghaken 20 der Schnürnadel 19 abgezogen und der Draht 8 zwischen der Rückseite des vorhergehenden Ballens und der Stirnfläche 10 des sich bildenden Ballens eingeklemmt wird. Sobald die vordere Oberkante des sich bildenden Ballens die Drilleinrichtung 13 erreicht hat, knickt das freie Ende des Drahtes 8c, bei fortgesetztem Vorschub des Ballens 6 um und gelangt durch die gegebene Zwangsführung in die in Abb. 8 gezeigte Lage. Dabei gelangt nachfolgend durch den fortgesetzten Preßvorgang das um 90° abgewinkelte, senkrecht in der Verschnürebene hochstehende Drahtende an den Klemmstücken 15 zur Anlage und wird festgeklemmt. Sobald der Ballen seine vorbestimmte Länge erreicht hat, läuft ein neuer Umschnürungsvorgang wie vorangehend beschrieben, ab.

**Patentansprüche**

1. Eindrahtverschnürungsmaschine zum Pressen und Verschnüren von Ballen aus Altmaterial, insbesondere Altpapier, bestehend aus einem Preßkasten (1), einem darin beweglichen Preßstempel (2), einer Verschnürungseinrichtung mit einer Schneid- (14) und Drilleinrichtung (13) sowie mit einer entlang einer Ballenrückseite beweglichen Schnürnadel (19) zum Bilden einer Drahtschleife (8a, 8b) über die Ballenfläche, auf der die Verdrillung erfolgen soll, hinaus, aus dem von einer rückwärts gelegenen Vorratsrolle (7) kommenden, an der gegenüberliegenden Ballenlängsseite und der Stirnseite vorbeiführenden Draht und mit einer Vorrichtung zum Längstransport des Drahtes in Preßrichtung in die Verdrillposition, dadurch gekennzeichnet, daß die Schnürnadel (19) mit der Drahtschleife (8a, b) parallel zur Preßrichtung (P) bis gegen die eingenommene Position der Drilleinrichtung (13) verfahrbar ist.

2. Maschine nach Anspruch 1, dadurch gekennzeichnet, daß die Drilleinrichtung (13) verfahrbar ist.

3. Maschine nach Anspruch 1 und 2, dadurch gekennzeichnet, daß an der Schnürnadel unterhalb des Fanghakens (20) im Abstand (x), senkrecht fluchtend mit dem Fanghaken (20), eine Führung (21) angeordnet ist.

4. Maschine nach Anspruch 3, dadurch gekennzeichnet, daß die Führung (21) ein Rollenlager (21a) ist.

5. Maschine nach Anspruch 1 bis 4, dadurch gekennzeichnet, daß die Spitze der Schnürnadel (22) als Führungsnut (23) ausgebildet ist.

6. Maschine nach Anspruch 1 bis 5, dadurch gekennzeichnet, daß der der Drilleinrichtung (13) zugewandte Schnürdraht (8b) zumindest in Verdrillposition zwischen Fanghaken (20) und Führung (21) achsparallel zu der anderen damit zu vereinigenden Drahtstrecke (8c) geführt ist.

7. Maschine nach Anspruch 1 bis 6, dadurch gekennzeichnet, daß die von der Ballenstirnseite (10) kommende Drahtstrecke (8) durch zumindest ein Klemmstück (15) in Verdrillposition gehalten ist.

## Claims

1. Single-wire strapping machine for pressing and strapping bales of waste material, especially waste paper, consisting of a pressing box (1), a pressing plunger (2) movable therein, a strapping device comprising a cutting device (14) and twisting device (13) and comprising a strapping needle (19) movable along a rear face of a bale for forming a wire loop (8a, 8b), beyond the bale surface on which the twisting is to take place, from the wire coming from a storage reel (7) situated towards the rear, conducted along the opposite longitudinal side of the bale and the front face of the bale, and comprising an apparatus for longitudinally transporting the wire in the pressing direction into the twisting position, characterized in that the strapping needle (19) with the wire loop (8a, 8b) is traversable parallel to the direction of pressing (P) as far as the position adopted by the twisting device (13).

2. Machine according to Claim 1, characterized in that the twisting device (13) is traversable.

3. Machine according to Claims 1 and 2, characterized in that a guide (21) is disposed on the strapping needle at a distance (x) below the capture hook (20) and vertically in line with the capture hook (20).

4. Machine according to Claim 3, characterized in that the guide (21) is a roller bearing (21a).

5. Machine according to Claims 1 to 4, characterized in that the tip of the strapping needle (22) is formed as a guide groove (23).

6. Machine according to Claims 1 to 5, characterized in that the strapping wire (8b) nearest the twisting device (13) is guided, at least in the twisting position, between capture hook (20) and guide (21) axially parallel to the other wire length (8c) to be joined to it.

7. Machine according to Claims 1 to 6, characterized in that the wire length (8) coming from the front face (10) of the bale is held in the twisting position by at least one clamping piece (15).

## Revendications

1. Machine de ficelage à fil unique pour la compression et le ficelage de balles de vieux matériaux, notamment de vieux papiers, qui comporte un caisson de compression (1), un poinçon (2) qui s'y déplace, un dispositif de ficelage comportant un dispositif de coupe (14) et un dispositif de torsion (13) ainsi qu'une aiguille à passer (19) qui se déplace le long d'un côté arrière de la balle pour la formation d'une ganse (8a, 8b) de fil métallique au-dessus de la surface de la balle sur laquelle la torsion doit s'effectuer, à partir du fil qui provient d'un rouleau d'alimentation (7) situé en arrière et passe devant le côté longitudinal opposé et le côté avant de la balle, et un dispositif de déplacement longitudinal du fil métallique dans la direction de compression jusqu'à la position de torsion, caractérisé en ce que l'aiguille à passer (19) peut se déplacer, avec la ganse (8a, 8b) du fil métallique, parallèlement à la direction de compression (P) jusqu'à la position occupée par le dispositif de torsion (13).

2. Machine selon la revendication 1, caractérisée en ce que le dispositif de torsion (13) peut être déplacé.

3. Machine selon la revendication 1 et 2, caractérisé en ce que l'aiguille à passer comporte, au-dessous du crochet de prise 20 à une distance x à la verticale au-dessous du crochet (20), un dispositif de guidage (21).

4. Machine selon la revendication 3, caractérisé en ce que le dispositif de guidage (21) est un rouleau (21a).

5. Machine selon l'une des revendications 1 à 4, caractérisé en ce que la pointe de l'aiguille à passer (22) comporte une rainure de guidage (23).

6. Machine selon l'une des revendications 1 à 5, caractérisé en ce que le fil (8b) situé du côté du dispositif de torsion (13) est guidé au moins en position de torsion entre le crochet de prise (20) et le dispositif de guidage (21) de manière à être parallèle à l'autre brin de fil (8c) qui doit lui être relié.

7. Machine selon l'une des revendications 1 à 6, caractérisé en ce que le brin de fil (8) qui vient du côté avant (10) de la balle est maintenu en position de torsion par au moins une pièce de serrage (15).

# Fig. 1

0 084 620

# Fig. 2

Fig. 3

Fig. 4

Fig. 5

4

## Fig. 6

## Fig. 7

Fig. 8

Fig. 9